Europäisches Patentamt

European Patent Office

Office européen des brevets

(11) Publication number: **0 417 686 A2**

## EUROPEAN PATENT APPLICATION

(21) Application number: 90117366.6

(51) Int. Cl.5: **C12H 1/06**

(22) Date of filing: **10.09.90**

(30) Priority: **13.09.89 IT 4169289**

(43) Date of publication of application:
**20.03.91 Bulletin 91/12**

(84) Designated Contracting States:
**CH DE ES FR LI**

(71) Applicant: **TMCI PADOVAN S.p.A.**
**Via Dal Vera 13**
**I-31015 Conegliano (Treviso)(IT)**

(72) Inventor: **Berzano, Mauro**
**Via Nazario Sauro 4**
**I-12051 Alba, Cuneo(IT)**

(74) Representative: **Modiano, Guido et al**
**MODIANO, JOSIF, PISANTY & STAUB**
**Modiano & Associati Via Meravigli, 16**
**I-20123 Milano(IT)**

(54) **Device for stabilizing wines prior to bottling.**

(57) A device for stabilizing wines prior to bottling particularly adapted to separate some natural components of the wine, mainly acid potassium tartrate, to avoid precipitations in already-packaged bottles. The device comprises an insulated container (1) which is divided into two chambers, one (3) for the infeed of the wine and one (4) for contact stabilization. The chambers (3,4) are connected, inside the container (1), by a tubular evaporator (9), with an internal agitator/scraper (14), of a refrigeration circuit (10). The infeed chamber (3) has, inside it, a device (8) for the exchange/recovery of heat between the already-treated wine and the wine to be treated, whereas the contact stabilization chamber has an agitator (17) which maintains a stabilizing fluid bed which it contains and through which the wine passes prior to its outflow and to its flow in the exchange/recovery unit (8).

Fig. 1

EP 0 417 686 A2

## DEVICE FOR STABILIZING WINES PRIOR TO BOTTLING

The present invention relates to a device for stabilizing wines prior to bottling.

Processes suitable for separating some natural components of wines, mainly acid potassium tartrate, by insolubility of said components and their precipitation, are currently known.

The execution of said processes thus prevents the insolubilization and precipitation phenomena from occurring inside the already-packaged bottles, which would cause extremely severe commercial damage to the producers.

By means of recent acquisitions on the subject of tartaric stabilization of wines, processes have been developed which, by also making use of artifices, are adapted to facilitate a rapid crystallization-precipitation process.

One of said methods, the so-called "contact" method, consists in causing the wine to pass in a fluid bed of acid potassium tartrate crystals kept in suspension in the wine itself.

The process substantially comprises a first step of pre-cooling of the crude wine on one side of a heat exchanger, using the already-treated cold wine on the other side and recovering its thermal energy, which would otherwise be lost.

In a subsequent step, the wine is passed in a special refrigeration unit, usually provided with a scraping body, which performs a further cooling down to the optimum temperature; when said temperature is reached, the wine is introduced in a container in which the actual "contact" step is performed.

After the precipitation of the tartrate crystals, the wine is filtered and, as mentioned, is passed through said exchanger.

Specific devices for each step are currently used for the execution of the above described stabilization process, producing a complicated apparatus characterized by considerable dimensions and connecting means.

The aim of the present invention is to provide a device in which a plurality of the steps which provide the tartaric stabilization process of wine are combined.

A consequent primary object is to provide a device which optimizes the above described stabilization process.

Another important object is to provide a device which allows to reduce the overall set of the devices which compose a wine stabilization system.

Still another object is to reduce the dimensions of wine stabilization systems.

Not least object is to reduce the costs of the devices which compose a wine stabilization system.

This aim, these objects and others which will become apparent hereinafter are achieved by a device for stabilizing wines prior to bottling, characterized in that it comprises an insulated container divided into a wine infeed chamber and into a contact stabilization chamber which are connected, inside the container, by a tubular evaporator, with an internal agitator/scraper, of a refrigeration circuit, said infeed chamber having a device for heat exchange/recovery between the already-treated wine and the wine to be treated, said contact stabilization chamber having an agitator which maintains a stabilizing fluid bed contained therein, through which the wine passes prior to its outflow and its transit in said exchange/recovery device.

Further characteristics and advantages of the invention will become apparent from the detailed description of an embodiment thereof, illustrated only by way of non-limitative example in the accompanying drawings, wherein:

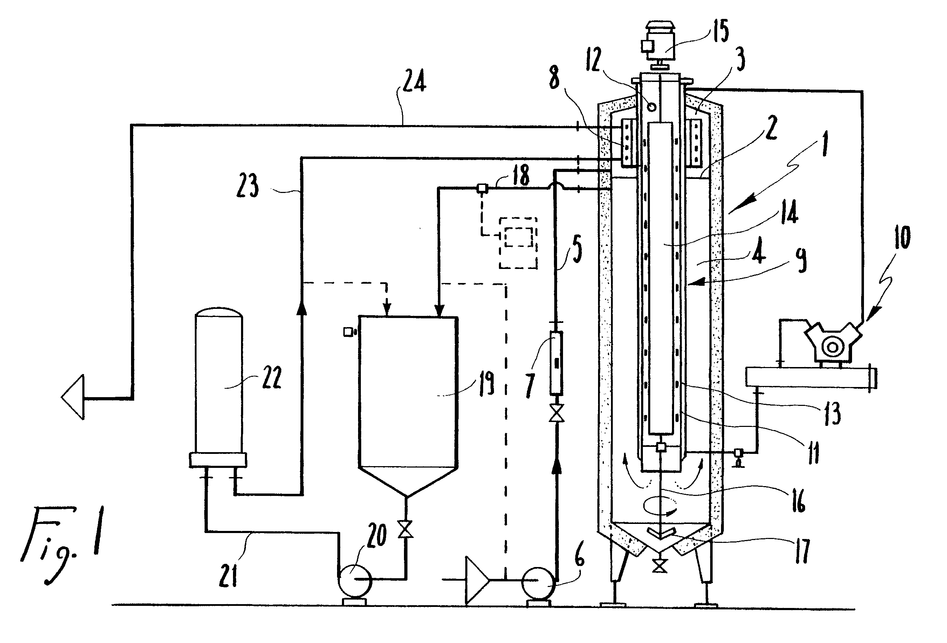

figure 1 is a schematic view of a system for the "contact" stabilization of wines in which the device according to the invention is comprised.

With reference to the above figure, a device according to the invention comprises an insulated container 1 which is arranged vertically in the present embodiment but can also conveniently be arranged horizontally and is divided by a partition 2 into an upper infeed chamber 3 and into a lower contact stabilization chamber 4.

In its lower part, said infeed chamber 3 is connected to a tube 5 for feeding the wine to be treated; a circulation pump 6 and a flow-rate measurement unit 7 are used in connection with the infeed tube 5.

A heat exchanger 8, which can be conveniently constituted by a tubular coil, by a hollow lamellar body or by a set of hollow elements with another shape, is accommodated in a substantially coaxial manner inside said infeed chamber 3.

Said heat exchanger 8 is adapted to provide heat exchange between the cold already-treated wine, with which it is fed internally, and the wine to be treated, which flows by it externally.

A step of pre-cooling of the wine thus occurs in the infeed chamber 3.

A tubular evaporator 9 of a refrigeration circuit 10, which comprises an externally arranged compressor-condenser unit, is arranged coaxially inside the container 1, is rigidly associated therewith so as to connect the two chambers 3 and 4 and is also arranged partially inside the exchanger 8.

In particular, said evaporator 9 comprises a metallic tube 11 which has appropriate upper lateral holes 12 in the region corresponding to the upper part of the chamber 3 and has an outer jacket 13 fed by the refrigerating fluid provided by the system 10.

The wine which is fed into said evaporator 9 by overflow from said chamber 3 through the holes 12 thus undergoes a rapid cooling, causing the evaporation of the refrigerating fluid present inside the jacket 13.

A rotary agitator/scraper 14 is present inside the metallic tube 11 and is actuated by an apparatus 15 which is arranged above and is for example constituted by an electric motor.

Said agitator/scraper 14 has the function of creating a turbulent hydraulic condition adapted to facilitate heat exchange between the wine which flows in the tube 11 and the evaporating fluid in the jacket 13, and furthermore continuously removes possible formations of ice on the internal wall caused by the low temperature.

A shaft 16 extends downward from said agitator/scraper 14, passes through the open lower end of the tube 11 and supports a bladed agitator 17 adapted to keep in suspension the crystalline mass of cream of tartar which constitutes a stabilizing "fluid bed" which is proximate to the bottom of the chamber 4.

The typical step of the process, i.e. insolubilization and crystallization of the separable components and therefore the stabilization of the wine, in fact occurs in this region on the descending wine.

The upper part of said chamber 4 is connected to an outflow tube 18 toward which the stabilized wine rises at low speed.

Said outflow tube 18 is connected to an external plenum chamber 19, from which a lower circulation pump 20 of a drawing tube 21 sends it to a filter 22 and then to a lower feed tube 23 of said heat exchanger 8.

Finally, a tube 24 connected in an upward position to the exchanger 8 draws the stabilized wine for bottling.

From what has been described above it is thus evident that a single apparatus has been provided inside which the main steps of the tartaric stabilization process of wines occur.

This allows not only an optimization of the process but also a considerable reduction in the dimensions of the apparatus which performs it and a considerable reduction in the costs for its execution.

In practice it has thus been observed that the invention has achieved the intended aim and objects.

The invention thus conceived is susceptible to numerous modifications and variations, all of which are within the scope of the inventive concept.

All the details may furthermore be replaced with other technically equivalent elements.

In practice, the materials employed, so long as compatible with the contingent use, may be any according to the requirements.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

## Claims

1. Device for stabilizing wines prior to bottling, characterized in that it comprises an insulated container (1) which is divided into a wine infeed chamber (3) and into a contact stabilization chamber (4), said chambers being connected, inside the container (1), by an evaporator (9), with an internal agitator/scraper (14), of a refrigeration system (10), said infeed chamber (3) having a device (8) for the exchange/recovery of heat between the already-treated wine and the wine to be treated, said contact stabilization chamber (4) having an agitator (17) which maintains a stabilizing fluid bed which is contained therein and through which the wine passes prior to its outflow and its passage in said exchange/recovery unit (8).

2. Device according to claim 1, characterized in that said insulated container (1) can have a vertical extension or a horizontal extension.

3. Device according to claims 1 and 2, characterized in that said evaporator (9) is constituted by a metallic tube which passes through a partition (2) which divides the two chambers (3,4) of said container (1), said metallic tube having, in the infeed chamber (3) region, upper lateral holes (12), which connect it to said infeed chamber (3), and being encased by an outer jacket (13) in which the refrigerating fluid provided by said refrigeration unit (10) flows and evaporates.

4. Device according to one or more of the preceding claims, characterized in that said agitator/scraper (14) is suitable for creating a turbulent hydraulic condition inside said evaporator (9), facilitating heat exchange, and for scraping ice formations on the internal wall.

5. Device according to one or more of the preceding claims, characterized in that said device (8) for the exchange/recovery of heat between the already-treated wine and the wine to be treated surrounds the portion of said evaporator (9) which is present in said infeed chamber (3) and is constituted by a tubular coil, by a hollow lamellar body or by a set of hollow elements with another shape.

6. Device according to one or more of the preceding claims, characterized in that said agitator of the fluid bed is constituted by a bladed agitator (17) which is rigidly associated with said agitator/scraper (14) and therefore rotates rigidly therewith.

7. Device according to one or more of the preceding claims, characterized in that the output (18) from said stabilization chamber is connected, through a plenum chamber (19) and a filter (22), to said heat exchange/recovery unit (8) for heat recovery.

Fig. 1

EP 0 417 686 A2